# EUROPÄISCHE PATENTANMELDUNG

(11) **EP 2 106 946 A1**
(43) Veröffentlichungstag der Anmeldung: **07.10.2009**
(21) Anmeldenummer: 09156251.2
(22) Anmeldetag: 26.03.2009
(51) Int. Cl.: B60J 7/06, B62D 33/02

(54) **Verdeckanordnung für Nutzfahrzeuge**

(30) Priorität: 31.03.2008 DE 102008000896
(71) Anmelder: TSE Trailer-System-Engineering GmbH & Co. KG, 72365 Ratshausen (DE)
(72) Erfinder: Boll, Uwe, 72348, Rosenfeld-Leidringen (DE)
(74) Vertreter: Weber, Gerhard

(57) **Zusammenfassung**

Bei einer Schiebeverdeckanordnung für Nutzfahrzeuge mit entlang von Längsholmen verfahrbaren, ein Mittelteil und an dessen entgegen gesetzten Enden angeordnete Laufwagenabschnitte aufweisenden Querbügelanordnungen wird vorgeschlagen, in den Querbügelanordnungen ein umgeformtes Blechteil vorzusehen, welches sich einteilig über die gesamte Länge der Querbügelanordnung erstreckt und insbesondere das Mittelteil und beide Laufwagenabschnitte einschließt. Das Blechteil ist vorzugsweise durch ein mehrfach gefaltetes Blech gebildet und weist mehrere Teilbereiche mit mehreren aneinander anliegenden und miteinander vorzugsweise formschlüssig verbundenen Blechlagen auf.

## Beschreibung

Die Erfindung betrifft eine Verdeckanordnung für Nutzfahrzeuge.

Verdeckanordnungen für Nutzfahrzeuge sind, um einen abgedeckten Laderaum eines Nutzfahrzeugs zur Be- und/oder Entladung auch von oben zugänglich zu machen, häufig als Schiebeverdeckanordnungen ausgeführt. Diese weisen zwei seitlich beabstandete Längsholme und eine Mehrzahl von quer zu den Längsholmen verlaufende und in diesen längsverfahrbar geführte Querbügelanordnungen auf. Die Querbügelanordnungen sind aus einem rohrförmigen Mittelteil und zwei an dessen Enden befestigten Laufwagenkonsolen aufgebaut, welche in Richtung des Rohres zusammengesteckt und fest, z. B. durch Clinchen miteinander verbunden sind. An den Laufwagenkonsolen sind mehrere Führungsrollen befestigt.

In Längsrichtung der Längsholme benachbarte Querbügelanordnungen sind über Bügelscherenanordnungen verbunden. Eine flexible Abdeckplane liegt auf den Querbügeln und den Bügelscherenanordnungen auf und kann aus einer Transportstellung mit gestreckten Bügelscherenanordnungen beim Zusammenschieben der Querbügelanordnungen mit sich aufstellenden Bügelscherenanordnungen aufgefaltet werden.

Der vorliegenden Erfindung liegt die Aufgabe zugrunde, bei einer derartigen Verdeckanordnung die Querbügelanordnungen zu verbessern.

Die Erfindung ist im Patentanspruch 1 beschrieben. Die abhängigen Ansprüche enthalten vorteilhafte Ausgestaltungen und Weiterbildungen der Erfindung.

Durch die einteilige Ausführung von Mittelteil und Laufwagenanordnungen als ein umgeformtes Blechteil entfallen mehrere Montageschritte und hierfür eventuell benötigte Maschinen und/oder Werkzeuge.

Vorteilhafterweise ist die Wandstärke des Blechteils in unterschiedlichen Teilbereichen verschieden, wobei das Verhältnis von maximaler zu minimaler Wandstärke wenigstens 2 : 1 beträgt, vorzugsweise werden verschiedene Wandstärken durch Falten eines Blechs mit zumindest in Teilbereichen verschiedener Anzahl von Blechlagen erreicht, wobei die Wandstärke durch die Summe der Blechdicken von aneinander anliegenden Blechlagen ist. In anderer vorteilhafter Ausführung können innerhalb einer Blechlage verschiedene Blechdicken in unterschiedlichen Teilbereichen vorliegen, z. B. nach Art sogenannter "tailored blanks".

Die bevorzugte Ausführung des Blechteils als gefaltetes Blechteil mit mehrlagigen Teilbereichen, d. h. mehreren flächig aneinander liegenden Blechlagen, ermöglicht ein hohes Biegewiederstandsmoment bei gleichzeitig geringem Gewicht. Insbesondere besteht die vorteilhafte Möglichkeit, mehrere Teilbereiche des Blechteils mit unterschiedlicher Anzahl von Blechlagen, nachfolgend auch als Lagenanzahl bezeichnet, vorzusehen und die Lagenanzahl in verschiedenen Teilbereichen an gegebenenfalls unterschiedliche mechanische Belastungen anzupassen. Insbesondere kann das Blechteil auch einen oder mehrere Teilbereiche mit nur einer Blechlage enthalten. Die Blechflächen der Teilbereiche, insbesondere von einlagigen Teilbereichen können vorteilhafterweise durch Prägestrukturen, wie z. B. Bombierungen oder Sicken versteift sein.

Aneinander liegende Blechlagen können vorteilhafterweise über Faltkanten miteinander zusammenhängen und das Blechteil ist vorzugsweise durch Falten eines ebenen Bleches herstellbar bzw. hergestellt. Die mehreren aneinander anliegenden Blechlagen sind vorteilhafterweise in den aneinander anliegenden Blechflächen miteinander verbunden, z. B. durch stoffschlüssige Verbindung, insbesondere Schweißen, wie z. B. Rollschweißen oder Widerstandsschweißen, oder vorzugsweise durch formschlüssige Verbindung über in Richtung der Flächennormalen verlaufende Verbindungen, wie z. B. Nieten. Besonders vorteilhaft ist die Verbindung der aneinander anliegenden Blechlagen mittels Durchsetzfügeverbindungen, die auch als Clinchen oder Toxen bekannt sind. Solche Durchsetzfügeverbindungen besitzen eine hohe Festigkeit und sind in der Herstellung besonders wirtschaftlich und erweisen sich bei den mehreren Blechlagen als besonders günstig.

Vorteilhafterweise sind mehrlagige Teilbereiche sowohl am Mittelteil als auch an den Laufwagenabschnitten vorgesehen, wobei die Lagenanzahl zwischen Laufwagenabschnitten und Mittelteil vorteilhafterweise verschieden sein kann, aber auch innerhalb der Laufwagenabschnitte und/oder des Mittelteils variieren kann. Insbesondere kann ein in Längsrichtung der Längsholme mittig in den Querbügelanordnungen liegender Teilbereich einlagig ausgeführt sein.

Die Ausführung des Blechteils als gefaltetes Blechteil und unterschiedliche Blechdicken nach Art der tailored blanks können gemeinsam realisiert sein.

Ein Maximum der Wandstärke des Blechteils, in der bevorzugten Ausführung als gefaltetes Blechteil ein Maximum der Lagenanzahl liegt vorteilhafterweise in den Laufwagenabschnitten vor. Vorzugsweise sind in den Laufwagenabschnitten die Flächennormalen aller Blechlagenflächen quer zur Längsrichtung der Längsholme ausgerichtet.

Die Laufwagenabschnitte beinhalten vorteilhafterweise in an sich gebräuchlicher Art in L-Form einen horizontalen und einen vertikalen Schenkel, an welchem Führungsrollen mit vertikalen bzw. horizontalen Rollenachsen befestigt sind. Der vertikale Schenkel schließt sich vorteilhafterweise an den vertikalen Schenkel an dessen dem Mittelteil abgewandten Ende an.

Vorteilhafterweise weist das Blechteil an einer dem Mittelteil abgewandten Kante eine Umlenkkante an, welcher parallel zur Längsrichtung der Längsholme verläuft und an welchem das Blechteil mit seinem von dem Mittelteil weg führenden Ende umgefaltet und in Richtung des Mittelteils, vorzugsweise bis zu dem Mittelteil oder einem Übergangsabschnitt zurückgeführt ist und die Lagenzahl des Laufwagenabschnitts dadurch verdoppelt.

Laufwagenabschnitt und Mittelteil können in einem Übergangsabschnitt ineinander übergehen, wobei die Erstreckung des Übergangsabschnitts in Querrichtung, also in Verbindungsrichtung zwischen den beiden Laufwagenabschnitten nicht mehr als 200 %, insbesondere nicht mehr als 100 % der Erstreckung des Laufwagenabschnitts in dieser Richtung beträgt. In dem Übergangsabschnitt können Flächenbereiche mit kontinuierlicher Krümmung, insbesondere gewendelter Flächenkrümmung auftreten, in welchen z. B. vertikale oder geneigt verlaufende Blechflächen des Mittelteils in horizontale Blechflächen des Laufwagenabschnitts übergeleitet werden. In anderer Ausführung können Blechlagen, welche nicht in gleichbleibender Ausrichtung zwischen Mittelteil und Laufwagenabschnitten fortgeführt werden am Übergang zwischen Mittelteil und Laufwagenabschnitt enden.

Das Blechteil ist vorteilhafterweise aus einem ebenen Blech durch Umformen, insbesondere Falten herstellbar, vorzugsweise aus einem Blechstreifen konstanter Breite, dessen lange Seitenkanten in dem gefalteten Blechteil zumindest überwiegend in Querrichtung, d. h. parallel zur Längserstreckung des Mittelteils verlaufen. In bevorzugter Ausführung ist das Blechteil aus einem fortlaufenden Blechstreifen, insbesondere von einem Coil, als Profil mit nachfolgender teilweiser Umformung eines Profilabschnitts zu dem Mittelteil oder insbesondere dem Laufwagenabschnitt herstellbar. Die Dicke des Ausgangsblechs bzw. der einzelnen Blechlagen beträgt vorteilhafterweise weniger als 1 mm, insbesondere weniger als 0,5 mm.

Die Erfindung ist nachfolgend anhand bevorzugter Ausführungsbeispiele unter Bezugnahme auf die Abbildungen noch eingehend veranschaulicht. Dabei zeigt:
- Fig. 1: eine Schrägansicht einer Querbügelanordnung,
- Fig. 2: einen vergrößerten Ausschnitt mit einer Laufwagenanordnung,
- Fig. 3: eine Seitenansicht zu Fig. 2,
- Fig. 4: eine Ansicht von unten zu Fig. 3,
- Fig. 5: eine Draufsicht zu Fig. 3,
- Fig. 6: eine Laufwagenanordnung in einem Längsholm,
- Fig. 7: einen vergrößerten Schnitt durch eine Laufwagenanordnung,
- Fig. 8: einen Schnitt mit zu Fig. 7 orthogonaler Schnittebene,
- Fig. 9: einen Querschnitt durch einen ersten Aufbau eines Mittelteils,
- Fig. 10: eine Variante zu Fig. 9 mit geschlossenem Querschnitt,
- Fig. 11: eine Ansicht vom Mittelteil auf eine Laufwagenanordnung,
- Fig. 12: einen weiteren Aufbau eines Mittelteils,
- Fig. 13: einen weiteren Aufbau eines Mittelteils,
- Fig. 14: eine Variante zu Fig. 13,
- Fig. 15: eine Querschnittsvariante zu Fig. 9,
- Fig. 16: eine Ausführung mit unterschiedlichen Blechdicken.

In den nachfolgenden Figuren sind teilweise Koordinatenachsen eines rechtwinkligen x-, y-, z-Koordinatensystems mit eingezeichnet, um die Orientierung der einzelnen Ansichten einfacher vergleichbar zu machen. Dabei sei in normaler Betriebslage eines mit einem Schiebeverdeck versehenen Nutzfahrzeuges bzw. der darauf befindlichen Querbügelanordnungen die z-Richtung, die Vertikalrichtung, die x-Richtung die in Fahrtrichtung weisende Horizontalrichtung, nachfolgend auch als Längsrichtung bezeichnet, in welcher die Längsholme der Schiebeverdeckanordnung verlaufen, und die y-Richtung die quer zur Fahrtrichtung verlaufende Horizontalrichtung, in welcher die Mittelteile der Querbügelanordnungen verlaufen. Die Querbügelanordnungen sind in Längsrichtung x auf den Längsholmen verfahrbar, wobei sich der Abstand der in Längsrichtung x aufeinander folgenden Querbügelanordnungen verändert und Bügelscheren sich aufrichten oder sich strecken.

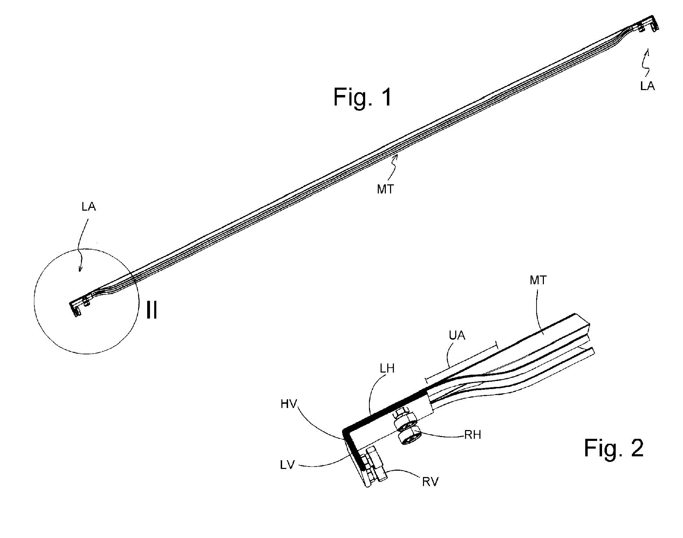

Fig. 1 zeigt in Schrägansicht von unten eine komplette Querbügelanordnung mit einem Mittelteil MT und an dessen in y-Richtung entgegen gesetzten Enden jeweils einer Laufwagenanordnung LA.

Fig. 2 zeigt den in Fig. 1 mit II bezeichneten Ausschnitt in vergrößerter Darstellung. Der Laufwagenabschnitt LA besitzt einen im wesentlichen in einer y-z-Ebene liegenden vertikalen Schenkel LV und einen im wesentlichen in einer x-y-Ebene liegenden horizontalen Schenkel LH. An dem vertikalen Schenkel LV sind Laufrollen RV mit in y-Richtung ausgerichteten Rollenachsen, an dem horizontalen Schenkel LH Laufrollen LH mit in z-Richtung ausgerichteten Rollenachsen befestigt, beispielsweise angenietet oder insbesondere angeschraubt.

Laufwagenabschnitt LA und Mittelteil MT gehen in dem skizzierten bevorzugten Beispiel in einem Übergangsabschnitt UA mit kontinuierlicher Querschnittsänderung ineinander über. Das Mittelteil MT sei als in Querrichtung y mit konstantem Querschnitt durchgehend verlaufend angenommen.

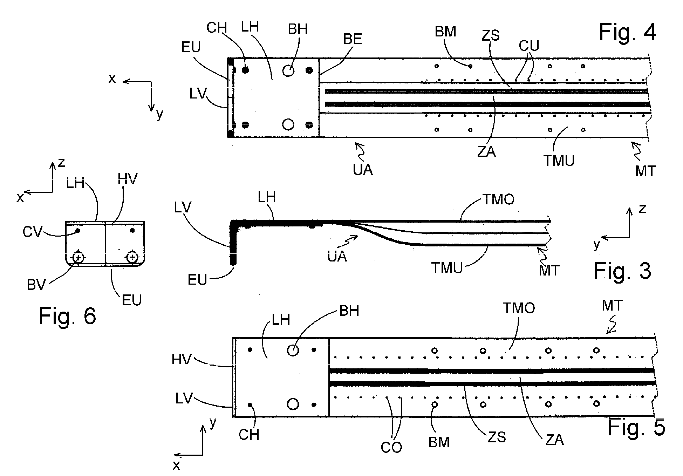

Fig. 3 zeigt ausschnittsweise eine vorteilhafte Ausführungsform einer Querbügelanordnung mit einem Laufwagenabschnitt LA, einem Übergangsabschnitt UA und ansatzweise dem Mittelteil MT. Fig. 4 ist eine entsprechende Ansicht von unten und Fig. 5 eine Ansicht von oben zu dem Beispiel nach Fig. 3.

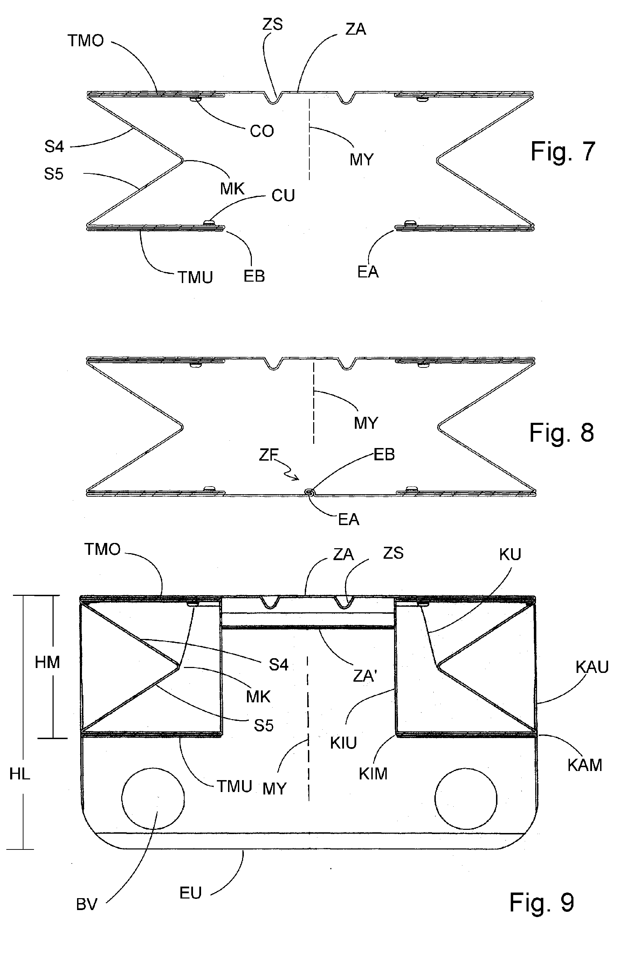

In der seitlichen Ansicht nach Fig. 3 mit Blickrichtung in x-Richtung weist das Mittelteil MT in y-Richtung einen konstanten Querschnitt mit einer Höhe HM in z-Richtung auf. Zwischen einem eine obere Fläche des Mittelteils bildenden mehrlagigen Teilbereich TMO und einem eine untere Begrenzung des Mittelteils bildenden mehrlagigen Teilbereich TMU sind zwei über eine Faltkante MK verbundene, schräg verlaufende Blechflächen S4, S5 gezeigt, deren Verlauf anhand von Fig. 9 bis Fig. 11 noch detailliert beschrieben ist.

Im Übergangsschnitt UA wird der Querschnitt des Mittelteils zum Laufwagenabschnitt LA hin abgeflacht, indem der untere Teilbereich TMU in Richtung der Ebene des oberen Teilbereichs TMO umgelenkt ist und am Ende des Übergangsabschnitts die Blechflächen S4, S5 zwischen sich und dem oberen Teilbereich TMO als weitere parallele Blechlagen einschließt. Die Blechlagen des unteren Teilbereichs TMU verlaufen im Übergangsabschnitt UA im skizzierten Beispiel im wesentlichen S-förmig, die im Mittelteil schräg gegen die Vertikale ausgerichteten Blechflächen S4, S5 bilden im Übergangsabschnitt UA gewendelte Flächenabschnitte.

In dem Laufwagenabschnitt LA sind die Blechlagen des oberen Teilbereichs TMO und des unteren Teilbereichs TMU sowie der zwischen diesen eingeschlossenen Blechlagen S4, S5 als einheitliches Blechlagenpaket weiter geführt und von dem Mittelteil MT weg weisend an einer Kante HV aus einem horizontalen Verlauf im Schenkel LH in einen vertikalen Verlauf im Schenkel LV fortgesetzt. An dessen unterer Kante ist das genannte Blechlagenpaket an einer Endumlenkung EU um 180° entlang einer zur x-Richtung parallelen Faltkante umgefaltet und parallel zu dem zu der Endumlenkung EU hin führenden Verlauf entlang des vertikalen Schenkels LV und des horizontalen Schenkels LH zurückgeführt. Die Endkante BE des Blechlagenpakets weist dem Übergangsabschnitt UA bzw. dem Mittelteil MT zu.

Die mehreren Blechlagen sind im vertikalen Schenkel und im horizontalen Schenkel untereinander verbunden, wobei als Verbindungstechnik vorzugsweise eine Durchsetzfügetechnik, insbesondere Clinchen oder Toxen zum Einsatz kommt. Mit CV sind Clinch-Verbindungen am vertikalen Schenkel LV, mit CH Clinch-Verbindungen am horizontalen Schenkel LH bezeichnet. In dem horizontalen Schenkel LH sind Bohrungen BH erzeugt, in welchen die Führungsrollen RH nach Fig. 2 befestigt werden. Im vertikalen Schenkel LV sind in entsprechender Weise Bohrungen BV erzeugt, in welchen die Führungsrollen RV befestigt werden. Die unteren Ecken des vertikalen Schenkels sind gerundet, um insbesondere Beschädigungen an seitlichen Planen zu vermeiden.

In dem Mittelteil sind mehrere Blechlagen der oberen Teilbereiche TMO und mehrere Blechlagen der unteren Teilbereiche TMU jeweils durch Clinch-Verbindungen CO bzw. CU verbunden.

Fig. 7 zeigt ein vorteilhaftes Beispiel eines Querschnitts durch das Mittelteil in einer x-z-Schnittebene. Ein zwischen Blechkanten EA und EB durchgehendes Blech bildet ein bezüglich einer Mittelebene MY vorteilhafterweise spiegelsymmetrisches Profil, welches insbesondere in jeder Hälfte des symmetrischen Querschnitts einen oberen Teilbereich TMO mit Blechlagen L1, L2, L3 und einen unteren Teilbereich TMU mit Blechlagen L6, L7 und L8 aufweist. Die Blechlagen der beiden Teilbereiche sind untereinander senkrecht zu den Blechflächen verbunden, wofür im oberen Teilbereich TMO Clinch-Verbindungen CO und im unteren Teilbereich TMU Clinch-Verbindungen CU vorgesehen sind. Der obere Teilbereich TMO und der untere Teilbereich TMU sind über zwei Blechflächen S4, S5 verbunden, welche gegen die Horizontale geneigt und ihrerseits an einer Falzkante MK gegeneinander abgewinkelt sind. Die oberen Teilbereiche TMO der beiden zueinander symmetrischen Hälften des Querschnitts sind über einen zentralen Blechabschnitt ZA in Fortsetzung der Blechlagen L1 miteinander verbunden. Der zentrale Abschnitt ZA ist im skizzierten Beispiel als eine einzige Blechlage ausgeführt. Zur Aussteifung des Bleches in diesem einlagigen Bereich können vorteilhafterweise Prägestrukturen in dem Blechabschnitt ZA vorgesehen sein, insbesondere Sicken ZS, welche senkrecht zur Zeichenebene fortgesetzt sein können.

Fig. 8 zeigt eine geringfügig abgewandelte Variante zu dem Querschnitt der Fig. 7, indem die untersten Lagen L8 der unteren Teilbereiche TMU zur Symmetriemittelebene MY hin verlängert und die Endkanten der Bleche dort in einem Falz ZF miteinander verbunden sind.

Der in Fig. 7 skizzierte Querschnitt ermöglicht vorteilhafterweise die Herstellung eines fortlaufend durchgehenden Profils, welches auf eine für eine Querbügelanordnung benötigte Länge abgelängt wird, welche sowohl das Mittelteil als auch die Laufwagenabschnitte LA erfasst. Beidseitig des das Mittelteil bildenden Abschnitts eines solchen einheitlich durchgehenden Profils können die Übergangsabschnitte UA und die Laufwagenabschnitte hergestellt werden, indem die unteren Teilbereiche TMU und die verbindenden Blechflächen S4, S5 in Richtung der Ebene der oberen Teilbereiche TMO umgebogen werden, wie aus dem geschwungenen Übergang in der Ansicht nach Fig. 3 ersichtlich ist. An den dem Mittelteil abgewandten Enden der Übergangsabschnitte liegen dann die Blechflächen S4, S5 als zu den Blechlagen L1 bis L3 und L6 bis L8 parallele Blechlagen L4, L5 zwischen den Blechlagen L3 und L6 und die Blechlagen L1 bis L8 bilden, wie in Fig. 9 bis Fig. 11 anschaulich ersichtlich ist, ein einheitliches Blechpaket.

In Fig. 9 ist von einer x-z-Schnittebene durch das Mittelteil mit Blickrichtung in y-Richtung auf eine Laufwagenanordnung, diese mit dem Querschnitt des Mittelteils und dem Übergangsabschnitt dargestellt. Die unteren Teilbereiche TMU des Mittelteils werden dabei mit in x-Richtung gleichbleibender Position der Faltkanten KAM, KIM in Richtung der oberen Teilbereiche TMO verschoben und durchlaufen dabei gekrümmte, aber in x-Richtung gleichbleibende Verläufe KAU, KIU. Die die beiden Blechflächen S4, S5 des Mittelteils verbindende Kante MK wird bei der Verlagerung in Richtung der oberen Teilbereiche TMO zugleich zur Mittelebene MY hin entlang der mit KU bezeichneten Linie verschoben. In x-Richtung zwischen den Übergangsabschnitten, in welchen die unteren Teilbereiche TMU in Richtung der oberen Teilbereiche TMO verlagert sind, verlaufen an der nach oben weisenden Fläche der Querbügelanordnung der zentrale Abschnitt ZA und nach Umlenkung an der Endumlenkung EU und Rückführung in Richtung des Mittelteils ein diesem entsprechender zentraler Abschnitt ZA'.

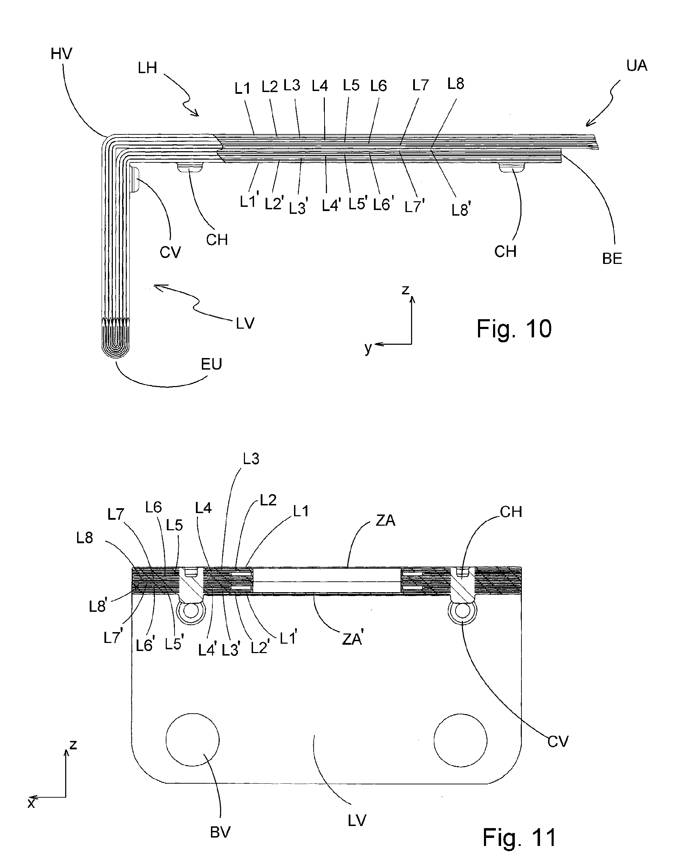

Fig. 10 zeigt mit Blickrichtung in x-Richtung eine teilweise geschnittene Ansicht eines Laufwagenabschnitts mit horizontalem Schenkel LH und vertikalem Schenkel LV, welche an der Abwinklung HV ineinander übergehen.

Von dem Mittelteil MT über den Übergangsabschnitt UA her kommend liegen die Blechlagen L1 bis L8 in paralleler horizontaler Flächenanordnung mit vertikalen Flächennormalen aneinander an und sind nach Umfaltung an der Endumlenkung EU des vertikalen Abschnitts LV sowohl in dem vertikalen Abschnitt LV als auch in dem horizontalen Abschnitt LH als gestrichen bezeichnete Lagen L1 bis L8' vorhanden und bilden zusammen ein Blechlagenpaket mit im Beispielsfall insgesamt 16 Blechlagen. Die Endkante BE des umgelenkten Teils weist dem Übergangsabschnitt UA bzw. dem Mittelteil MT zu. Die Blechlagen L1 ... L8, L8' ... L1' sind im vertikalen Abschnitt LV über Clinch-Verbindungen CV und im horizontalen Abschnitt LH über Clinch-Verbindungen CH formschlüssig miteinander verbunden und bilden eine besonders formstabile Struktur des Laufwagenabschnitts, an welchem die Führungsrollen befestigt sind und über welche sich die Querbügelanordnung auf den Längsholmen abstützt. Vorteilhafterweise sind an den den Laufwagenabschnitt in x-Richtung begrenzenden Seitenkanten jeweils die Faltkanten der Blechlagen L1-L2, L3-L4, ... nach außen weisend, so dass an diesen Stellen keine scharfen Blechkanten zutage treten. Lediglich an den gerundeten Ecken im Bereich der Endumlenkung EU treten die Einzelblechlagen nach außen in Erscheinung.

Fig. 11 zeigt eine Ansicht mit Blickrichtung in y-Richtung auf die der Fahrzeugmitte bzw. dem Längsholm zuweisende Innenfläche eines Laufwagenabschnitts mit einer x-z-Schnittebene durch den horizontalen Schenkel LH eines Laufwagenabschnitts. Hierbei ist insbesondere erkennbar, dass die aus den im Mittelteil schräg verlaufenden Blechflächen S4, S5 fortgeführten Blechlagen L4, L5 in Richtung der Mittelebene MY kürzer sind als die Blechlagen L2, L3, L6, L7 und entsprechend die gestrichen mit ansonsten gleicher Kennzeichnung bezeichneten Blechlagen L2' bis L7' des zurückgeführten Teil-Blechpakets. Die Blechlagen L4, L5 bzw. L4', L5' erstrecken sich aber in Richtung der Mittelebene so weit, dass im Bereich der mit unterbrochener Linie angedeuteten Bohrungen BH im horizontalen bzw. Bohrungen BV im vertikalen Schenkel das vollständige Blechlagenpaket mit 16 Blechlagen L1 ... L8, L8' ... L1' vorliegt.

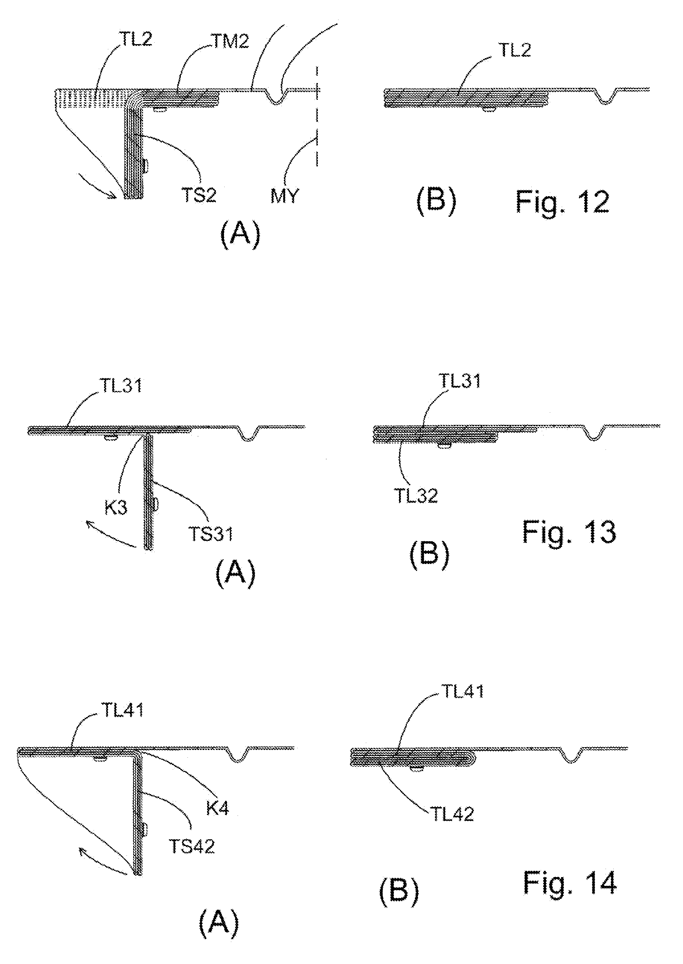

Fig. 12 zeigt eine andere Ausführungsform einer Zusammenfassung von einer Mehrzahl von Blechlagen eines mehrfach gefalteten Blechs, bei welcher davon ausgegangen sei, dass anfänglich ein Profil mit einem mittleren Abschnitt ZA und symmetrisch zu einer Mittelebene MY liegenden mehrlagigen ebenen Teilbereichen TL2, wie in Fig. 12(B) als Schnitt in einer x-z-Ebene durch das dem Laufwagenabschnitt zuweisende Ende des Übergangsabschnitts dargestellt, hergestellt wird, und dass zur Herstellung des Mittelteils der Querbügelanordnung ein der Mittelebene MY zugewandter Teil TM2 eines solchen Teilbereichs TL2 in dessen Ausrichtung bestehen bleibt und ein der Mittelebene MY in x-Richtung abgewandter Teil eines solchen Teilbereichs TL2 nach unten umgebogen wird und einen im Verlauf des Mittelteils in y-Richtung vorliegenden Teilbereich TS2 mit im wesentlichen vertikalen Blechflächen mit in x-Richtung weisender Flächennormalen bildet, wie in Fig. 12(A) für eine x-z-Schnittebene durch das Mittelteil dargestellt ist. Das Mittelteil ist dabei in x-Richtung schmäler als die Laufwagenabschnitte. In den Laufwagenabschnitten kann vorteilhafterweise wieder eine Lagenverdoppelung durch Umlenkung an einer Endumlenkung EU und Rückführung über den Verlauf des Laufwagenabschnitts gegeben sein.

Eine weitere Variante nach Fig. 13 mit entsprechenden Schnittbildern (A), (B) in zwei Ebenen sieht vor, dass in dem Mittelteil ein oberer Teilbereich TL31 mit mehreren untereinander verbundenen Blechlagen mit vertikaler Flächennormale vorgesehen ist und sich über eine Faltkante K3 ein Teilbereich TS32 mit mehreren untereinander verbundenen Blechlagen mit im wesentlichen in x-Richtung weisender Flächennormale vorhanden sind. Die oberste Blechlage des oberen Teilbereichs TL31 kann wiederum über einen einlagigen mittleren Abschnitt ZA zu dem symmetrisch bezüglich einer Mittelebene MY liegenden anderen oberen Teilbereich eines spiegelsymmetrischen Querschnitts des Mittelteils führen.

Beim Übergang von dem Mittelteil zu den Laufwagenabschnitten kann der Teilbereich TS32 aus der vertikalen Flächenanordnung mit in x-Richtung weisenden Flächennormalen um die Faltkante K3 umgebogen sein in eine horizontale Ausrichtung der Blechlagen parallel zu den Blechlagen des Abschnitts TL31 und dort eine Blechlagengruppe TL32 bilden, welche parallel zu der Blechlagengruppe des Teilbereichs TL31 verläuft und wieder nach bevorzugter Endumlenkung am vertikalen Schenkel des Laufwagenabschnitts, Rückführung und damit verbundener Doppelung ein verstärktes Blechlagenpaket für den Laufwagenabschnitt bildet.

Fig. 14 zeigt in Abwandlung zu Fig. 13 eine Ausführung, bei welcher ein durchgehend herstellbares Profil gemäß Fig. 14(A) einen oberen Teilbereich TL41 mit mehreren Blechlagen und einen vertikalen Teilbereich TS42 enthält, welche an einer Faltkante K4 über mehrere Blechlagen verbunden sind. Analog zu Fig. 13 kann in einem Übergangsabschnitt der Teilbereich TS42 durch Umbiegen um die Faltkante K4 als Teilbereich TL42 an den Teilbereich TL41 angelegt werden und mit diesem ein Blechpaket mit der Summe der Blechlagen von TL41 und TS42 bilden.

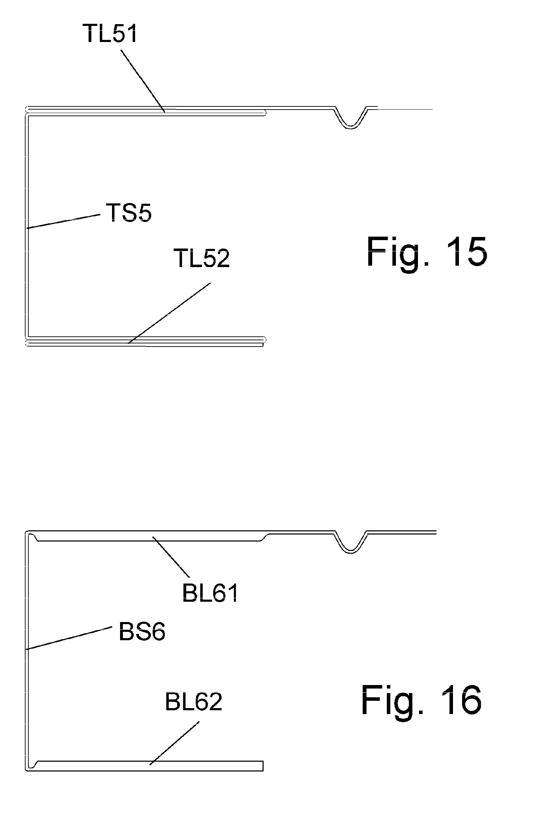

Fig. 15 zeigt einen Querschnitt durch ein Mittelteil in einer zu Fig. 9 entsprechenden Ansicht, bei welchem ein oberer mehrlagiger Teilbereich TL51 und ein unterer mehrlagiger Teilbereich TL52 über einen vertikalen seitlichen Teilbereich TS5 verbunden sind, welcher im Beispiel einlagig ausgeführt ist. Beim Übergang zu den Laufwagenabschnitten wird der seitliche Teilbereich TS5 auf halber Höhe eingedrückt und über einen schrägen Übergangsverlauf ähnlich den Blechflächen S4, S5 aus Fig. 7 in den Laufwagenanordnungen parallel zu den Teilbereichen TL51, TL52 mit diesen zu einem Teilbereich mit größerer Wandstärke verbunden.

Fig. 16 zeigt ein Ausführungsbeispiel mit einem zu Fig. 15 ähnlichen Querschnitt unter Verwendung eines Bleches, welches innerhalb einer Blechlage unterschiedliche Blechdicken aufweist, wie dies von sogenannten "tailored blanks" bekannt ist. Ein solches Blech weise beispielsweise Teilbereiche ZA6, BS6 mit geringerer Blechdicke und Teilbereiche BL61, BL62 mit größerer Blechdicke auf und ist wie skizziert derart umgeformt, dass die Teilbereiche mit den größeren Blechdicken BL61 und BL62 einen oberen bzw. unteren horizontalen Teilbereich, der Teilbereich BS6 einen die beiden Teilbereiche BL61 und BL62 verbindenden seitlichen vertikalen Teilbereich und der Teilbereich ZA6 einen horizontalen mittleren Teilbereich bei der vertikalen Mittelebene der Querbügelanordnung bilden.

Anstelle einer kontinuierlichen Umbiegung von Teilbereichen beim Übergang von dem Mittelteil zu den Laufwagenabschnitten kann auch vorgesehen sein, dass Teilbereiche an einer Trennstelle zwischen Mittelteil und Laufwagenabschnitten durchtrennt sind und an einer solchen Trennebene enden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Verdeckanordnung für Nutzfahrzeuge mit zwei seitlich beabstandeten Längsholmen und einer Mehrzahl von Querbügelanordnungen, welche jeweils mit einem quer zu den Längsholmen zwischen diesen verlaufenden Mittelteil zwischen den Längsholmen verlaufen und über an beiden Enden des Mittelteils angeordnete Laufwagenabschnitten an den Längsholmen abgestützt und längsverschiebbar geführt sind, **dadurch gekennzeichnet, dass** die Laufwagenanordnungen einteilig mit dem Mittelteil ausgeführt sind und ein in Querrichtung die Laufwagen und das Mittelteil umfassendes umgeformtes Blechteil enthalten.

2. Anordnung nach Anspruch 1, **dadurch gekennzeichnet, dass** das Blechteil wenigstens zwei Teilbereiche mit unterschiedlicher Wandstärke umfasst.

3. Anordnung nach Anspruch 2, **dadurch gekennzeichnet, dass** eine Blechlage des Blechteils unterschiedliche Blechdicken in verschiedenen Teilbereichen umfasst.

4. Anordnung nach einem der Ansprüche 1 bis 3, **dadurch gekennzeichnet, dass** das Blechteil zumindest in Teilbereichen zu mehreren aneinander anliegenden Blechlagen gefaltet ist.

5. Anordnung nach Anspruch 4, **dadurch gekennzeichnet, dass** die mehreren Blechlagen in den Flächen in Richtung ihrer Flächennormalen verbunden sind.

6. Anordnung nach Anspruch 4 oder 5**, dadurch gekennzeichnet, dass** die Blechlagen mittels Durchsetzfügeverbindungen verbunden sind.

7. Anordnung nach einem der Ansprüche 4 bis 6, **dadurch gekennzeichnet, dass** mehrlagige Teilbereiche sowohl an Laufwagenabschnitten als auch am Mittelteil vorgesehen sind.

8. Anordnung nach einem der Ansprüche 4 bis 7, **dadurch gekennzeichnet, dass** wenigstens zwei mehrlagige Teilbereiche mit unterschiedlichen Lagenanzahlen verbundener Blechlagen vorgesehen sind.

9. Anordnung nach einem der Ansprüche 4 bis 8, **dadurch gekennzeichnet, dass** wenigstens ein Teilbereich mit nur einer Blechlage vorgesehen ist.

10. Anordnung nach Anspruch 9, **dadurch gekennzeichnet, dass** ein mittlerer Teilbereich, welcher in Längsrichtung der Längsholme zwischen zwei anderen Teilbereichen liegt, einlagig ausgeführt ist.

11. Anordnung nach einem der Ansprüche 4 bis 10, **dadurch gekennzeichnet, dass** in den Laufwagenabschnitten die Flächennormalen aller Blechlagen quer zur Längsrichtung verlaufen.

12. Anordnung nach einem der Ansprüche 2 bis 11, **dadurch gekennzeichnet, dass** in den Laufwagenabschnitten die maximale Wandstärke auftritt.

13. Anordnung nach einem der Ansprüche 1 bis 12, **dadurch gekennzeichnet, dass** die Laufwagenabschnitte an ihren dem Mittelteil abgewandten Enden einen zur Längsrichtung parallelen Umlenkfalz aufweisen und der umgelenkte Bereich sich quer zur Längsrichtung über den gesamten Teilbereich der Laufwagenabschnitte erstreckt.

14. Anordnung nach Anspruch 1 bis 13, **dadurch gekennzeichnet, dass** zwischen Mittelteil und Laufwagen in einem Übergangsabschnitt ein kontinuierlicher Übergang mit gekrümmten Flächen des Blechteils ausgebildet ist.

15. Anordnung nach einem der Ansprüche 1 bis 14, **dadurch gekennzeichnet, dass** das Blechteil aus einem Blechstreifen konstanter Breite geformt ist.
